# EUROPÄISCHE PATENTSCHRIFT

(11) **EP 4 163 121 B1**
(45) Veröffentlichungstag und Bekanntmachung des Hinweises auf die Patenterteilung: **07.05.2025**
(21) Anmeldenummer: 22020440.8
(22) Anmeldetag: 13.09.2022
(51) Int. Cl.: B42D 25/324, B42D 25/328, B42D 25/369, B42D 25/373, B42D 25/425, C09C 1/00, C09D 11/037

(54) **HERSTELLUNG EINES PIGMENTS**
PRODUCTION OF A PIGMENT
PRÉPARATION D'UN PIGMENT

(30) Priorität: 05.10.2021 DE 102021004984
(43) Veröffentlichungstag der Anmeldung: 12.04.2023
(73) Patentinhaber: Giesecke+Devrient Currency Technology GmbH, 81677 München (DE)
(72) Erfinder: Hettenkofer, Christine, 85653 Aying (DE); Hoffmüller, Winfried, 83646 Bad Tölz (DE); Renner, Patrick, 83677 Reichersbeuern (DE); Szendrei-Temesi, Katalin, 82024 Taufkirchen (DE); Sobol, Michael, 81379 München (DE); Scherer, Kai Herrmann, 81539 München (DE); Scherer, Maik Rudolf Johann, 82491 Grainau (DE)
(74) Vertreter: Giesecke+Devrient IP

(56) Entgegenhaltungen:
- EP-A1- 2 062 947
- EP-B1- 3 230 795
- WO-A1-2019/057322
- WO-A2-2007/105001

## Beschreibung

Die Erfindung betrifft die Herstellung eines Pigments, insbesondere eines plättchenförmigen Effektpigments zur Verwendung in einer Druckfarbe.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

Dünnschichtsysteme, die beim Betrachter mittels Interferenz einen betrachtungswinkelabhängigen Farbeindruck erzeugen, sind im Stand der Technik bekannt. Dieser optische Effekt kann als ein optisch variables Sicherheitselement dienen. Ein großflächiges Dünnschichtsystem kann mittels verschiedener Techniken zerkleinert werden. Die Größe der entstehenden Flocken bzw. Plättchen kann lateral bis zu wenige Mikrometer betragen, die Größe bewegt sich jedoch zumeist in einem Bereich von 2µm bis 100µm. Der vertikale Aufbau eines Plättchens ist durch die Anforderungen an die Interferenzschichten gegeben und ist in der Regel so dünn wie möglich, z.B. in einem Bereich von 200 nm bis 800 nm. Solche Plättchen kommen z.B. in optisch variabler Farbe (sogenannte OVI^{®}-Farbe) zum Einsatz, die zur Bereitstellung eines Sicherheitselements dient.

Weiterhin bekannt ist die Möglichkeit, die einen Farbeindruck erzeugenden Dünnschichtsysteme auf ein ferromagnetisches Material aufzubringen. Somit besitzen die Pigmentplättchen ein magnetisches Moment. Magnetisch orientierbare Effektpigmente sind z.B. kommerziell unter dem Handelsnamen OVMI^{®} der Firma SICPA erhältlich (die Abkürzung OVMI steht für den Begriff "optically variable magnetic ink"). Die Pigmente besitzen typischerweise einen plättchenförmigen Aufbau und liegen in Form eines Schichtverbunds vor, der häufig zwei Lagen optischer Effektschichten und eine dazwischen eingebettete magnetische Schicht beinhaltet. Mit Bezug auf die optischen Effektschichten kommen metallisch-spiegelnde Schichten ebenso wie farbschiebende Schichtsysteme, z.B. mit einem Absorber/ Dielektrikum / Reflektor-Aufbau, infrage. Die eingebettete Magnetschicht ist in der Regel nicht sichtbar, ist aber zur Ausrichtung der Pigmente erforderlich.

Die WO 2019/057322 A1 beschreibt ein Verfahren zur Herstellung von Pigmentfragmenten, umfassend das Erzeugen einer ersten Schicht auf einem Substrat, das Strukturieren der ersten Schicht und das Ablösen der Pigmentfragmente vom Substrat. Es handelt sich bei der ersten Schicht um eine rissbildende Schicht, sodass diese durch die Bildung von Rissen strukturiert wird. Vor dem Ablösen der Pigmentfragmente wird auf die durch Risse strukturierte erste Schicht eine Pigmentschicht aufgetragen.

Die EP 2 062 947 A1 beschreibt opake Flakes, wie etwa Pigmente oder helle, in Farben verwendete Flakes, mit einer ausgewählten Form und/oder anderen Merkmalen, um einem Objekt ein verdecktes Sicherheitsmerkmal zu verleihen. Bei der Herstellung der Flakes wird ein Bogen mit geprägten Rahmen bereitgestellt, auf dem sich eingeprägte Symbole oder Zeichen befinden.

Die WO 2007/105001 A2 beschreibt ein Verfahren zur Herstellung von Partikeln mit kontrollierten Abmessungen, umfassend die Schritte: (i) Bereitstellen eines laminaren Substrats mit einer gemusterten Oberfläche, die ein Mikrorelief-Wiederholungsmuster umfasst, das eine oder mehrere diskrete Zellen umfasst, wobei jede Zelle aus einem Bodenabschnitt und Wänden besteht; (ii) Abscheiden von organischem oder anorganischem Material auf der strukturierten Oberfläche und in den Zellen, um eine Dicke (T) des abgeschiedenen Materials bereitzustellen; (iii) Ablösen des abgeschiedenen organischen oder anorganischen Materials von der Oberfläche des Substrats; und (iv) Sammeln der aus dem organischen oder anorganischen Material gebildeten Partikel; und eine aus dem Verfahren erhältliche Zusammensetzung, die eine Vielzahl von Partikeln umfasst, wobei die Anzahl (n) der Partikel in der Zusammensetzung mindestens 10 beträgt, wobei die Partikel (P) Plättchen sind, die eine planare Geometrie aufweisen, die kreisförmig ist oder aus einer Anzahl (x) von planaren (y)seitigen Polygonen besteht, wobei x zwischen 1 und 20 liegt und y mindestens 3 beträgt.

Grundsätzlich besteht das Bedürfnis, wohldefinierte Pigmente, d.h. Pigmente definierter Form und definierter Größe, auf einfache Art und Weise mit möglichst wenig Verfahrensschritten herzustellen. Dabei sollte nach Möglichkeit auf die Verwendung einer zusätzlichen Release-Schicht verzichtet werden.

Der vorliegenden Erfindung liegt daher die Aufgabe zugrunde, ein Verfahren zur Herstellung von wohldefinierten Pigmenten, d.h. Pigmente definierter Form und definierter Größe, bereitzustellen, das lediglich eine geringe Anzahl von Verfahrensschritten aufweist. Eine weitere Aufgabe der Erfindung ist das Bereitstellen von nach dem Verfahren erhältlichen Pigmenten, insbesondere plättchenförmige Effektpigmente zur Verwendung in einer Druckfarbe.

Diese Aufgabe wird auf Grundlage der im unabhängigen Anspruch definierten Merkmalskombination gelöst.

Weiterbildungen der Erfindung sind Gegenstand der abhängigen Ansprüche.

### Zusammenfassung der Erfindung

Verfahren zum Herstellen von Pigmenten definierter Form und definierter Größe gemäß dem Anspruch 1.

### Ausführliche Beschreibung der bevorzugten Ausführungsformen

Der vorliegenden Erfindung liegt die Idee zugrunde, ein Verfahren zur Erzeugung von Pigmenten definierter Form und definierter Größe bereitzustellen, für das die Verwendung einer zusätzlichen Release-Schicht nicht erforderlich ist. Die zu erzeugenden Pigmente können wahlweise eine Oberflächenstruktur aufweisen. Die Erfindung basiert auf dem Heranziehen eines mittels UV-Strahlung härtenden Prägelacks, der zugleich mit wässriger Lösung ablösbar ist und daher als eine Release-Schicht dient. Für die Ausübung des erfindungsgemäßen Verfahrens wird zweckmäßigerweise ein Trägersubstrat, z.B. ein Polyethylenterephthalat(PET)-Substrat, herangezogen. Das Trägersubstrat wird gegebenenfalls einer Druckvorbehandlung wie etwa einer Coronabehandlung unterzogen. Darauffolgend erfolgt das Beschichten des Trägersubstrats mit einem mittels UV-Strahlung härtenden Prägelacks. In den UV-Prägelack können definierte Strukturen, die für die Größe und Form der zu erzeugenden Pigmente ausschlaggebend sind, geprägt werden. Zusätzlich zu den geprägten Sollbruchstellen, die die Pigmentgröße und die Pigmentform definieren, können wahlweise zusätzliche Feinstrukturen geprägt werden, die für die Oberflächenstruktur der zu erzeugenden Pigmente ausschlaggebend sind. Diese Feinstrukturen können die physikalischen, insbesondere optischen Eigenschaften der Pigmente verändern oder als forensisches Merkmal dienen. Bei den Feinstrukturen kann es sich insbesondere um Nanostrukturen, Hologrammstrukturen wie etwa Hologrammgitter oder Mikrostrukturen wie etwa ein Mikrospiegelrelief handeln. Typischerweise ist die Höhe dieser Oberflächenstrukturen kleiner als die der geprägten Solbruchstrukturen. Die in den Prägelack geprägten Feinstrukturen werden auf die zu erzeugenden Pigmente übertragen. Bei dem forensischen Merkmal handelt es sich insbesondere um ein mit bloßem Auge nicht erkennbares, sondern erst unter dem Mikroskop für den Betrachter erkennbares forensisches Merkmal, das vorzugsweise in der Form von Zeichen, in der Form eines Musters oder in Form einer Codierung vorliegt.

Nach dem Schritt des Prägens des Prägelacks oder zeitgleich mit dem Schritt des Prägens des Prägelacks erfolgt das UV-Härten des Prägelacks. Die nach dem UV-Härten vorliegende Prägelackschicht zeichnet sich dadurch aus, dass sie mit wässriger Lösung ablösbar und insbesondere eine wasserlösliche oder zumindest wasserquellbare Prägelackschicht ist. Hinsichtlich der Wasserablösbarkeit der Prägelackschicht ist es von Vorteil, wenn die Prägelackschicht nicht vollständig ausgehärtet ist. Mithilfe der folgenden Parameter kann der Aushärtegrad der Prägelackschicht im Prägeprozess beeinflusst werden:
- Art des UV-Strahlers, z.B. konventioneller, insbesondere eisendotierter Quecksilber-Mitteldruckstrahler oder UV-LED-Strahler;
- Menge eines geeigneten Photoinitiators, wobei die Menge wellenlängenabhängig sein kann;
- Temperatureintrag bzw. Wärmebeaufschlagung während des Prägeprozesses;
- eventuelle Zugabe von Kettenüberträgern, z.B. Thiole, siehe z.B. die Schrift EP 3 230 795 B1.

Geeignete Rohstoffe für den UV-härtenden Prägelack sind Präpolymere und/oder Reaktivverdünner wie etwa Polyethylenglykoldiacrylat, ethoxyliertes Trimethylolpropantriacrylat, Acryloylmorpholin (siehe z.B. die Schrift EP 3 230 795 B1) und weitere Acrylat-basierte (Co-)Polymere. Die Rohstoffe können insbesondere wasserlöslich sein. Den Rohstoffen wird zweckmäßigerweise ein Photoinitiator beigemengt, z.B. 2-Hydroxy-2-methyl-1-phenylpropanon, Bis(2,4,6-Trimethylbenzoyl)-phenylphosphinoxid, Ethyl(2,4,6-Trimethylbenzoyl)-phenylphosphinat oder Mischungen zweier oder mehrerer der vorstehend genannten Stoffe, wobei gegebenenfalls Additive hinzugefügt werden können. Anschließend wird die mittels UV-Strahlung gehärtete Prägelackschicht metallisiert.

Die Metallisierung kann insbesondere eine reflektierende metallische Schicht sein, vorzugsweise eine Al-Schicht oder eine Ag-Schicht. Des Weiteren kann es sich bei der Metallisierung um ein farbkippendes Dünnschichtsystem handeln, insbesondere ein Dünnschichtsystem mit einem Absorber/ Dielektrikum / Reflektor-Aufbau, wobei wahlweise eine magnetische Schicht zur räumlichen Ausrichtung des Effektpigments mittels eines externen Magnetfelds enthalten sein kann. Ein bevorzugtes Dünnschichtsystem umfasst die Schichtenfolge Absorber/ Dielektrikum/ Reflektor/ Dielektrikum/ Absorber. Ein weiteres bevorzugtes Dünnschichtsystem umfasst die Schichtenfolge Absorber/ Dielektrikum/Reflektor/magnetische Schicht/ Reflektor/ Dielektrikum/ Absorber.

Als Absorber sind insbesondere die Elemente Cr, Al und Ti geeignet, wobei eine Schichtdicke von weniger als 20nm bevorzugt wird. Als Dielektrikum ist insbesondere SiO₂, ZnS und MgF₂ geeignet, wobei eine Schichtdicke von weniger als 600nm und größer als 50nm bevorzugt wird. Als Reflektor ist insbesondere das Element Al geeignet, wobei eine Schichtdicke von mehr als 15nm bevorzugt wird. Als magnetische Schicht ist z.B. FeSi, Fe oder Ni geeignet, wobei eine Schichtdicke von weniger als 1µm und größer als 50nm bevorzugt wird.

Für das Bereitstellen eines plättchenförmigen Effektpigments, das von beiden Seiten jeweils denselben optisch-variablen Farbkippeffekt aufweist, wird bevorzugt, einen farbkippenden Dünnschichtaufbau auf Basis eines symmetrischen Interferenzschichtaufbaus heranzuziehen, der die Schichtenfolge absorbierende Schicht - dielektrische Schicht - reflektierende Schicht - dielektrische Schicht - absorbierende Schicht aufweist. Als absorbierende Schicht eignet sich z.B. eine Cr-Schicht. Bezüglich der dielektrischen Schicht kann z.B. eine SiO₂-Schicht oder eine ZnS-Schicht gewählt werden. Mit Bezug auf die reflektierende Schicht wird zweckmäßigerweise eine Al-Schicht gewählt.

Mit Vorteil wird das beschichtete bzw. metallisierte Substrat, das insbesondere in Form einer Folie vorliegt, im Zuge eines Rolle-zu-Rolle-Prozesses durch ein (gegebenenfalls heißes) Wasserbad gefahren und auf diese Weise gegebenenfalls mithilfe zusätzlicher mechanischer Maßnahmen wie etwa Bürsten die mit wässriger Lösung ablösbare UV-Prägelackschicht aufgelöst oder gequollen, sodass die aufgedampfte Metallisierung gewissermaßen abgesprengt wird und die wohlgeformten Pigmente gewonnen werden können. Wenn der UV-Prägelack wasserlöslich ist, werden die Pigmente z.B. mittels Dekantieren abgetrennt und gewaschen. Wenn der UV-Prägelack wasserquellbar ist, werden die Pigmente zweckmäßigerweise von gegebenenfalls im Wasser schwimmenden Prägelackstücken, die sich vom Trägersubstrat abgelöst haben, abgetrennt, z.B. durch Dekantieren oder eventuell durch Abtrennen mittels Nutzung gegebenenfalls vorhandener magnetischer Eigenschaften der Pigmente.

Vorteilhafte Rezepturen zur Herstellung des UV-Prägelacks basieren auf einem Gemisch, das 95 Gew.-% Photomer und 5 Gew.-% Photinitiator aufweist.

Des Weiteren besteht die Möglichkeit, die in der Schrift EP 3 230 795 B1 genannten Rezepturen für die Herstellung eines wasserlöslichen UV-Prägelacks heranzuziehen. Das in der Schrift erwähnte Acrylatmonomer, nämlich Acryloylmorpholin (ACMO), das als Lackrohstoff grundsätzlich einsetzbar ist, tendiert zu einem gewissen Anhaften auf dem Prägewerkzeug, sodass nach dem Prägeprozess gegebenenfalls eine Nicht-Ablösbarkeit vom Prägewerkzeug resultiert. Dieses Problem kann behoben werden, indem dem zu erzeugenden UV-Prägelack zweckmäßigerweise weitere Additive beigemengt werden, die die Haftung am Prägewerkzeug verringern. Geeignete Additive sind z.B. (insbesondere nicht-vernetzende) Alkylphosphonderivate, Phosphorsäurederivate oder Alkoxysilane. Infolge der verringerten Anhaftung auf dem Metall kann nicht nur der Release vom Prägewerkzeug verbessert werden, sondern zusätzlich das Ablösen der im nächsten Schritt aufgedampften Metallisierung vom Prägelack. Das Ablösen der erzeugten Pigmente wird somit verbessert.

Eine optionale, zusätzliche Maßnahme für das Ablösen wohldefinierter Pigmente, die wahlweise mit einer Oberflächenstruktur versehen sind, wäre der Einsatz eines wasserlöslichen Primers, der drucktechnisch unterhalb der UV-Prägelackschicht erzeugt vorliegt. Mittels einer wässrigen Lösung kann die Primerschicht abgelöst werden, wodurch die Prägelackschicht abschwimmt und in die einzelnen Pigmente zerfällt. Diese Maßnahme erfordert allerdings eine zusätzliche Release-Schicht und ist somit weniger bevorzugt.

Der Einsatz einer wasserablösbaren, ggf. wasserlöslichen, optional UVvernetzbaren Dual-Cure-Thermoplast-Rezeptur kann z.B. auf den folgenden Mischungen basieren:
- 95 Gew.-% Laromer 8983 + 5 Gew.-% Irgacure 819 DW; oder
- 75 Gew.-% Laromer 8983 + 20 Gew.-% Laromer 9005 + 5 Gew.-% Irgacure 819 DW.

Eine Aushärtung bzw. UV-Belichtung wird zweckmäßigerweise in einem solchen Umfang durchgeführt, wie es im Hinblick auf Filmbildung und Vernetzung für einen vorteilhaften Release und die nachfolgende Metallisierung sowie die Temperaturbeständigkeit erforderlich ist. Das Prägen in den Thermoplast kann ggf. vor dem Schritt des UV-Härtens erfolgen.

Üblicherweise erfolgt die Filmbildung und die relative Wasserunempfindlichkeit eines wässrigen Systems nach physikalischer Trocknung über das Austreiben von Aminen. Wasseraffine Carbanionen mit Ammoniumion als Gegenion werden zur Carbonsäure, ggf. findet eine Veresterung statt. Ein Ablösen erfolgt zweckmäßigerweise mit Wasser, vorzugsweise mittels basischer wässriger Lösung, sodass insbesondere eine Verseifung und Rückbildung der Carbanionen resultiert. Eine Basizität kann zweckmäßigerweise durch Hinzufügen von NaOH, Ammoniak und/ oder Aminen erzeugt werden.

Gegebenenfalls ist der Einsatz von Pufferlösungen möglich, um die Oxidation der Metallisierung zu verhindern. Vorzugsweise werden (Mono-/Diester-)Phosphorsäurepuffer oder Alkylphosphonsäurepuffer verwendet, weil diese Puffer die Metalloberfläche passivieren können.

Der mittels des erfindungsgemäßen Herstellungsverfahrens erzielte Vorteil basiert insbesondere darauf, dass keine zusätzliche Release-Schicht bereitgestellt werden muss, sodass deutlich geringere Kosten, weniger Materialverbrauch und weniger Arbeitsschritte erforderlich sind. Der in der vorliegenden Erfindung eingesetzte UV-Prägelack dient zugleich als Release-Schicht. Darüber hinaus ist kein Release-verbesserndes Additiv notwendig.

Der in der vorliegenden Erfindung eingesetzte UV-Prägelack ist insbesondere so beschaffen, dass auf eine eventuelle Hitzeanfälligkeit, d.h. eine bestimmte Erweichungstemperatur von Trägersubstrat und Prägelack, keine Rücksicht genommen werden muss, weil der Prägelack UV-härtbar ist.

Das erfindungsgemäße Herstellungsverfahren ist darüber hinaus mit dem Vorteil verbunden, dass ein zusätzlicher Mahlprozess nach dem Ablösen der Pigmentschicht für das Gewinnen der Pigmente nicht notwendig ist.

Weitere Vorteile der Erfindung werden nachfolgend anhand von Ausführungsbeispielen in Verbindung mit schematisch stark vereinfachten Figuren erläutert, bei deren Darstellung auf eine maßstabs- und proportionsgetreue Wiedergabe verzichtet wurde, um die Anschaulichkeit zu erhöhen.

Es zeigen:
- Figuren 1 bis 5: ein erfindungsgemäßes Herstellungsverfahren gemäß einem ersten Ausführungsbeispiel;
- Figuren 6 bis 8: ein erfindungsgemäßes Herstellungsverfahren gemäß einem zweiten Ausführungsbeispiel.

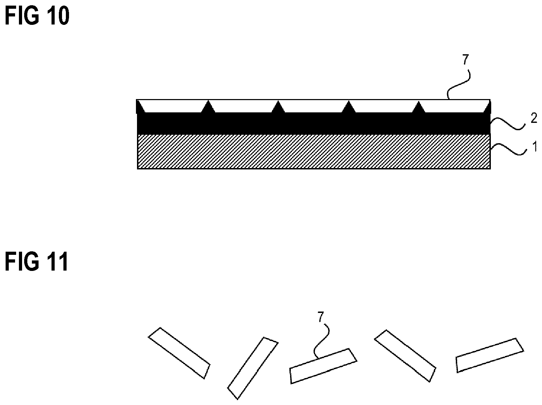

- Die Figuren 9 bis 11: dienen nur zur allgemeinen Illustration und zeigen keine erfindungsgemäßen Gegenstände.

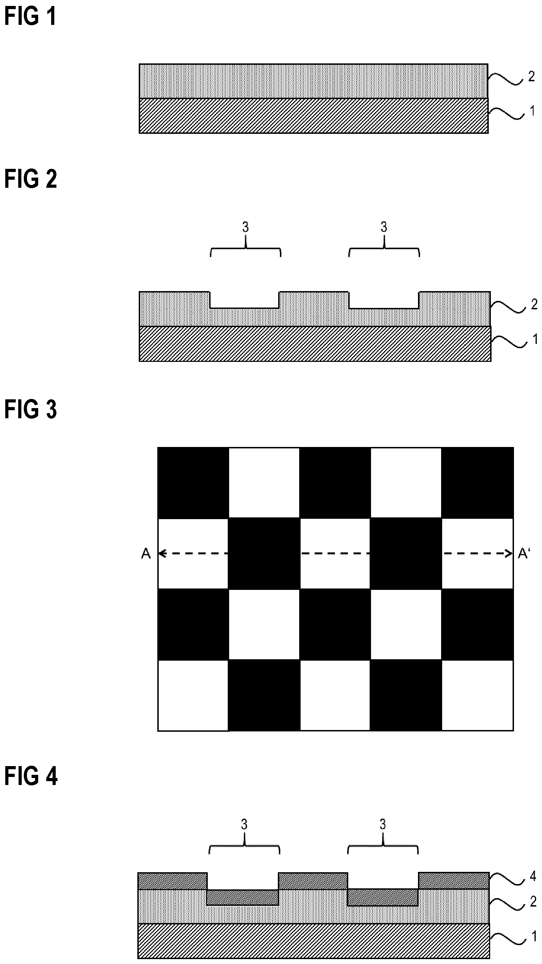

Die Figuren 1 bis 5 veranschaulichen ein erfindungsgemäßes Herstellungsverfahren gemäß einem ersten Ausführungsbeispiel. Zunächst erfolgt gemäß der Figur 1 das Bereitstellen eines Polyethylenterephathalat(PET)-Substrats 1. Für das Erzielen einer verbesserten Haftung des zu erzeugenden Prägelacks 2 wird das Trägersubstrat 1 einer Druckvorbehandlung, im Beispiel eine Coronabehandlung, unterzogen. Danach erfolgt das Beschichten des Trägersubstrats 1 mit einem mittels UV-Strahlung härtenden Prägelacks 2. Der Prägelack 2 basiert auf einem Gemisch mit 84 Gew.-% Acryloylmorpholin (ACMO), 10 Gew.-% 2-Ethylhexylthioglykolat, 5 Gew.-% 2-Hydroxy-2-methyl-1-phenyl-propan-1-on als Photoinitiator sowie 1 % Polysiloxan-Tensid. Dem Gemisch wird darüber hinaus ein Additiv beigemengt, das die Haftung des Prägelacks 2 am Prägewerkzeug verringert. Das Additiv wird zweckmäßigerweise von einem Alkylphosphonderivat, einem Phosphorsäurederivat oder einem Alkoxysilan gewählt, wobei auch ein Gemisch zweier oder mehrerer der vorstehend genannten Stoffe eingesetzt werden kann. Das Aufbringen des Prägelacks 2 erfolgt mittels Tiefdruck.

Gemäß der Figur 2 erfolgt daraufhin z.B. mit einem Nickelprägewerkzeug das Einprägen definierter Strukturen 3 in den Prägelack 2, wobei die Prägestrukturen 3 für die Größe und die Form der zu erzeugenden Pigmente ausschlaggebend sind. Die Prägetiefe der Prägestruktur 3 entspricht gemäß einer bevorzugten Variante höchstens der Schichtdicke des zu erzeugenden Pigments. Alternativ kann gemäß einer weiteren bevorzugten Variante so vorgegangen werden, dass die Schichtdicke des zu erzeugenden Pigments, d.h. die Pigmentmaterialschicht, etwas größer ist als die Prägetiefe der Prägestruktur 3, wobei die resultierende Pigmentmaterialschicht im Nachgang zu den einzelnen Pigmenten gebrochen werden muss. Nach dem Schritt des Verprägens des Prägelacks 2 erfolgt eine UV-Polymerisation, für die eine Hg-Mitteldruckdampflampe verwendet wird.

In den UV-Prägelack 2 können wahlweise zusätzliche Feinstrukturen geprägt werden, die für die Oberflächenstruktur der zu erzeugenden Pigmente ausschlaggebend sind. Diese Feinstrukturen können die physikalischen, insbesondere optischen Eigenschaften der Pigmente verändern oder als forensisches Merkmal dienen. Bei den Feinstrukturen kann es sich insbesondere um Nanostrukturen, Hologrammstrukturen wie etwa Hologrammgitter oder Mikrostrukturen handeln. Typischerweise ist die Höhe dieser Oberflächenstrukturen kleiner als die der geprägten Solbruchstrukturen.

Die Figur 3 zeigt den mit Prägestrukturen versehenen Prägelack 2 in Draufsicht. Die Figur 2 zeigt eine Querschnittansicht entlang der in der Figur 3 dargestellten, gestrichelten Linie A-A'.

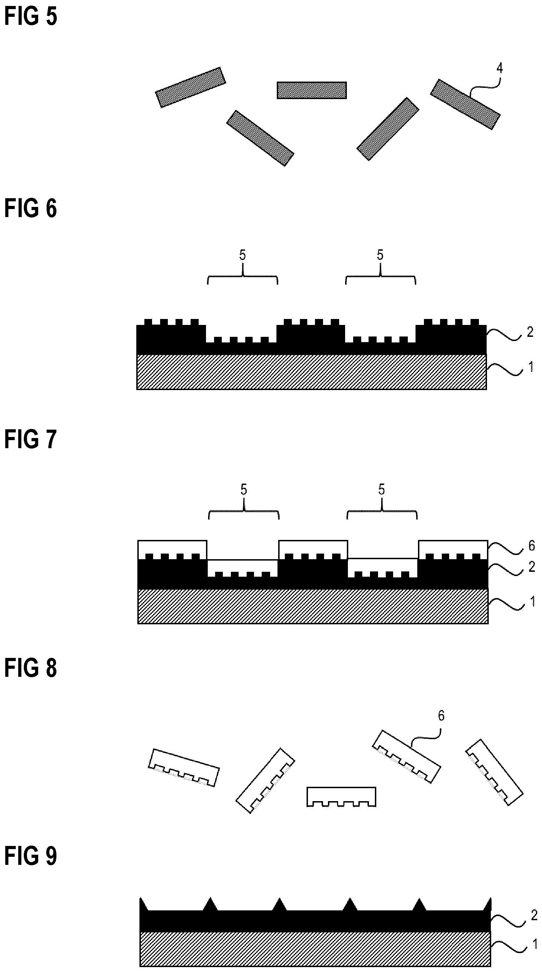

Nach dem Schritt des UV-Härtens des Prägelacks 2 erfolgt der Schritt des Metallisierens, bei dem der Prägelack 2 mit einem farbkippenden Dünnschichtaufbau 4 versehen wird (siehe Figur 4). Der farbkippende Dünnschichtaufbau 4 ist im vorliegenden Ausführungsbeispiel ein symmetrischer Interferenzschichtaufbau, der die Schichtenfolge absorbierende Schicht - dielektrische Schicht - reflektierende Schicht - dielektrische Schicht - absorbierende Schicht aufweist, im Beispiel der Aufbau Cr/ SiO₂/Al/SiO₂/Cr. Die metallisierte Folie wird im Zuge eines Rolle-zu-Rolle-Prozesses durch ein heißes Wasserbad gefahren und auf diese Weise gegebenenfalls mithilfe zusätzlicher mechanischer Maßnahmen wie etwa Bürsten die mit wässriger Lösung ablösbare UV-Prägelackschicht 2 aufgelöst, sodass die aufgedampfte Metallisierung 4 abgesprengt wird und die wohlgeformten, plättchenförmigen Effektpigmente gewonnen werden können (siehe Figur 5). Die Pigmente werden hierfür mittels Dekantieren abgetrennt und gewaschen.

Anhand der Figuren 6 bis 8 wird nachstehend ein erfindungsgemäßes Herstellungsverfahren gemäß einem zweiten Ausführungsbeispiel beschrieben, das an das vorstehend beschriebene erste Ausführungsbeispiel angelehnt ist. Gemäß der Figur 6 wird ein Trägersubstrat 1 mit dem im ersten Ausführungsbeispiel beschriebenen UV-härtenden Prägelack 2 beschichtet. Daraufhin erfolgt z.B. mit einem Nickelprägewerkzeug das Einprägen definierter Strukturen 5 in den Prägelack 2, wobei die Prägestrukturen 5 für die Größe und die Form der zu erzeugenden Pigmente ausschlaggebend sind. Darüber hinaus sind in den Prägelack 2 zusätzliche Feinstrukturen hineingeprägt, die für die Oberflächenstruktur der zu erzeugenden Pigmente ausschlaggebend sind. Diese Feinstrukturen verändern die optischen Eigenschaften der Pigmente oder dienen als forensisches Merkmal. Bei den Feinstrukturen kann es sich um Nanostrukturen, Hologrammstrukturen wie etwa Hologrammgitter oder Mikrostrukturen handeln. Die Höhe dieser Oberflächenstrukturen ist kleiner als die der geprägten Solbruchstrukturen. Nach dem Schritt des Verprägens des Prägelacks 2 erfolgt eine UV-Polymerisation, für die eine Hg-Mitteldruckdampflampe verwendet wird. Nach dem Schritt des UV-Härtens des Prägelacks 2 erfolgt der Schritt des Metallisierens, bei dem der Prägelack 2 mit dem im ersten Ausführungsbeispiel beschriebenen farbkippenden Dünnschichtaufbau 6 versehen wird (siehe Figur 7). Die metallisierte Folie wird im Zuge eines Rolle-zu-Rolle-Prozesses durch ein heißes Wasserbad gefahren und auf diese Weise gegebenenfalls mithilfe zusätzlicher mechanischer Maßnahmen wie etwa Bürsten die mit wässriger Lösung ablösbare UV-Prägelackschicht 2 aufgelöst, sodass die aufgedampfte Metallisierung 6 abgesprengt wird und die wohlgeformten, plättchenförmigen Effektpigmente gewonnen werden können (siehe Figur 8). Die Pigmente werden hierfür mittels Dekantieren abgetrennt und gewaschen.

## Patentansprüche

1. Verfahren zum Herstellen von Pigmenten definierter Form und definierter Größe, umfassend
a) das Bereitstellen eines Trägersubstrats (1);
b) das Beschichten des Trägersubstrats (1) mit einem mittels UV-Strahlung härtenden und nach UV-Härten mit wässriger Lösung ablösbaren Prägelacks (2);
c) das prägetechnische Einbringen definierter Strukturen in den Prägelack (2), die für die definierte Form und die definierte Größe der zu erzeugenden Pigmente bestimmend sind;
d) das UV-Härten des Prägelacks (2);
e) das Beschichten des Prägelacks (2) mit einer Pigmentmaterialschicht (4, 6, 7);
f) das Behandeln des erhaltenen Schichtaufbaus mit wässriger Lösung, um den Prägelack (2) auf diese Weise abzulösen und die für das Bereitstellen einzelner Pigmente geeignete Pigmentmaterialschicht (4, 6, 7) freizusetzen; und
g) das Gewinnen der aus der Pigmentmaterialschicht (4, 6, 7) erhältlichen Pigmente, wobei gegebenenfalls ein mechanischer Stress auf die Pigmentmaterialschicht (4, 6, 7) ausgeübt wird;
wobei das prägetechnische Einbringen definierter Strukturen in den Prägelack (2) im Schritt c), die für die definierte Form und die definierte Größe der zu erzeugenden Pigmente bestimmend sind, so erfolgt, dass die definierten Strukturen für die Erzeugung einer auf zumindest zwei verschiedenen Höhenstufen angeordneten und verdünnte Bereiche aufweisenden Pigmentmaterialschicht (4, 6) geeignet ist, wobei die verdünnten Bereiche als Sollbruchstellen dienen.

2. Verfahren nach Anspruch 1, wobei im Schritt c) zusätzlich das prägetechnische Einbringen einer Feinstruktur als eine optisch wirksame Oberflächenstruktur in den Prägelack (2) erfolgt, wobei die Feinstruktur vorzugsweise von einer Nanostruktur, einer Hologrammstruktur wie etwa ein Hologrammgitter oder einer Mikrostruktur wie etwa ein Mikrospiegelrelief gewählt ist.

3. Verfahren nach Anspruch 1 oder 2, wobei im Schritt c) zusätzlich das prägetechnische Einbringen einer Feinstruktur in den Prägelack (2) erfolgt, wobei die Feinstruktur ein mit bloßem Auge nicht erkennbares, sondern erst unter dem Mikroskop für den Betrachter erkennbares forensisches Merkmal ist, wobei das forensische Merkmal vorzugsweise in der Form von Zeichen, in der Form eines Musters oder in Form einer Codierung vorliegt.

4. Verfahren nach einem der Ansprüche 1 bis 3, wobei der mittels UV-Strahlung härtende und nach UV-Härten mit wässriger Lösung ablösbare Prägelack (2) im Schritt b) auf einem wasserlöslichen Rohstoffgemisch basiert, umfassend zumindest einen Photoinitiator und Präpolymere und/oder Reaktivverdünner, die vorzugsweise von der Gruppe bestehend aus Polyethylenglykoldiacrylat, ethoxyliertem Trimethylolpropantriacrylat, Acryloylmorpholin und Acrylat-basierten (Co-)Polymeren gewählt sind.

5. Verfahren nach einem der Ansprüche 1 bis 4, wobei die Pigmentmaterialschicht (4, 6, 7) im Schritt e) eine optisch wirksame Funktionsschicht ist und vorzugsweise eine reflektierende metallische Schicht wie etwa eine Al-Schicht oder eine Ag-Schicht oder ein farbkippendes Dünnschichtsystem mit einem Absorber/Dielektrikum/Reflektor-Aufbau ist, wobei gegebenenfalls eine zusätzliche magnetische Schicht zur räumlichen Ausrichtung des Effektpigments mittels eines externen Magnetfelds enthalten sein kann.

6. Verfahren nach Anspruch 5, wobei die optisch wirksame Funktionsschicht ein farbkippendes Dünnschichtsystem mit der Schichtenfolge absorbierende Schicht - dielektrische Schicht - reflektierende Schicht - dielektrische Schicht - absorbierende Schicht ist.

7. Verfahren nach einem der Ansprüche 1 bis 6, wobei die Pigmente plättchenförmige Effektpigmente sind.

## Claims

1. Method for producing pigments of defined shape and defined size, comprising
a) providing a carrier substrate (1);
b) coating the carrier substrate (1) with an embossing varnish (2) which cures by means of UV radiation and which is detachable with an aqueous solution after UV curing;
c) introducing defined structures into the embossing varnish (2) by means of embossing, which structures are a determining factor for the defined shape and the defined size of the pigments to be produced;
d) UV curing of the embossing varnish (2);
e) coating the embossing varnish (2) with a pigment material layer (4, 6, 7);
f) treating the obtained layer construction with an aqueous solution in order in this way to detach the embossing varnish (2) and to release the pigment material layer (4, 6, 7) suitable for providing individual pigments; and
g) extracting the pigments obtainable from the pigment material layer (4, 6, 7), wherein optionally a mechanical stress is exerted on the pigment material layer (4, 6, 7);
wherein introducing defined structures into the embossing varnish (2) by means of embossing in step c), which structures are a determining factor for the defined shape and the defined size of the pigments to be produced, is carried out such that the defined structures are suitable for producing a pigment material layer (4, 6) arranged at at least two different height levels and having thinned regions, wherein the thinned regions serve as predetermined breaking points.

2. Method according to Claim 1, wherein in step c) introducing a fine structure as an optically effective surface structure into the embossing varnish (2) by means of embossing is additionally carried out, wherein the fine structure is preferably selected from a nanostructure, a hologram structure such as a hologram grating or a microstructure such as a micromirror relief.

3. Method according to Claim 1 or 2, wherein in step c) introducing a fine structure into the embossing varnish (2) by means of embossing is additionally carried out, wherein the fine structure is a forensic feature that is not discernible to the naked eye but rather is only discernible to the observer under the microscope, wherein the forensic feature is preferably in the form of characters, in the form of a pattern or in the form of a coding.

4. Method according to any of Claims 1 to 3, wherein the embossing varnish (2) which cures by means of UV radiation and which is detachable with an aqueous solution after UV curing in step b) is based on a watersoluble raw material mixture, comprising at least one photoinitiator and prepolymers and/or reactive diluents, which are preferably selected from the group consisting of polyethylene glycol diacrylate, ethoxylated trimethylolpropane triacrylate, acryloylmorpholine and acrylate-based (co)polymers.

5. Method according to any of Claims 1 to 4, wherein the pigment material layer (4, 6, 7) in step e) is an optically effective functional layer and is preferably a reflective metallic layer such as an Al layer or an Ag layer or a colour-shifting thin-film layer system with an absorber/dielectric/reflector construction, wherein optionally an additional magnetic layer for the spatial alignment of the effect pigment by means of an external magnetic field can be included.

6. Method according to Claim 5, wherein the optically effective functional layer is a colour-shifting thin-film layer system with the layer sequence: absorbing layer - dielectric layer - reflective layer - dielectric layer - absorbing layer.

7. Method according to any of Claims 1 to 6, wherein the pigments are platelet-shaped effect pigments.

## Revendications

1. Procédé permettant de préparer des pigments de forme définie et de taille définie, comprenant les étapes consistant à
a) fournir un substrat porteur (1) ;
b) recouvrir le substrat porteur (1) par un vernis d'estampage (2), durcissant au moyen d'un rayonnement UV et détachable par une solution aqueuse après le durcissement UV ;
c) introduire dans le vernis d'estampage (2), par une technique d'estampage, des structures définies qui déterminent la forme définie et la taille définie des pigments à produire ;
d) durcir aux UV le vernis d'estampage (2) ;
e) recouvrir le vernis d'estampage (2) d'une couche de matière pigmentaire (4, 6, 7) ;
f) traiter la structure en couches obtenue avec une solution aqueuse pour détacher le vernis d'estampage (2) de cette façon et pour exposer la couche de matière pigmentaire (4, 6, 7) adaptée pour fournir des pigments individuels ; et
g) extraire les pigments pouvant être obtenus à partir de la couche de matière pigmentaire (4, 6, 7), dans lequel le cas échéant, une contrainte mécanique est exercée sur la couche de matière pigmentaire (4, 6, 7) ;
dans lequel l'introduction dans le vernis d'estampage (2), par une technique d'estampage, de structures définies à l'étape c) qui sont déterminantes pour la forme définie et la taille définie des pigments à produire est effectuée de telle sorte que les structures définies sont adaptées pour produire une couche de matière pigmentaire (4, 6) disposée sur au moins deux niveaux de hauteur différents et présentant des zones amincies, les zones amincies servant de points destinés à la rupture.

2. Procédé selon la revendication 1, dans lequel à l'étape c), l'introduction par une technique d'estampage d'une structure fine en tant que structure de surface à effet optique dans le vernis d'estampage (2) est en outre effectuée, dans lequel la structure fine est de préférence sélectionnée parmi une nanostructure, une structure d'hologramme, comme un réseau holographique, ou une microstructure, comme par exemple un relief de micromiroir.

3. Procédé selon la revendication 1 ou 2, dans lequel à l'étape c), l'introduction, par une technique d'estampage, d'une structure fine dans le vernis d'estampage (2) est en outre effectuée, dans lequel la structure fine est une particularité judiciaire invisible à l'œil nu mais seulement visible pour l'observateur sous le microscope, dans lequel la particularité judiciaire se présente de préférence sous la forme de symboles, sous la forme d'un motif ou sous la forme d'un codage.

4. Procédé selon l'une quelconque des revendications 1 à 3, dans lequel le vernis d'estampage (2) durcissant au moyen d'un rayonnement UV et détachable par une solution aqueuse après le durcissement UV est basé à l'étape b) sur un mélange de matières premières hydrosolubles, comprenant au moins un photoinitiateur ou des prépolymères et/ou des diluants réactifs qui sont sélectionnés de préférence dans le groupe composé de diacrylate de polyéthylène glycol, de triacrylate de triméthylolpropane éthoxylé, d'acryloylmorpholine et de (co-) polymères à base d'acrylate.

5. Procédé selon l'une quelconque des revendications 1 à 4, dans lequel la couche de matière pigmentaire (4, 6, 7) à l'étape e) est une couche de fonction à effet optique, et est de préférence une couche métallique réfléchissante, comme par exemple une couche Al ou une couche Ag, ou un système de couches minces à changement de couleur avec une structure absorbeur/diélectrique/réflecteur, dans lequel le cas échéant, une couche magnétique supplémentaire peut être contenue pour l'alignement spatial du pigment à effets au moyen d'un champ magnétique externe.

6. Procédé selon la revendication 5, dans lequel la couche de fonction à effet optique est un système de couches minces à changement de couleur avec une séquence de couches couche absorbante - couche diélectrique - couche réfléchissante - couche diélectrique - couche absorbante.

7. Procédé selon l'une quelconque des revendications 1 à 6, dans lequel les pigments sont des pigments à effets en forme de plaquette.
